# EUROPÄISCHE PATENTANMELDUNG

(11) **EP 3 293 591 A1**
(43) Veröffentlichungstag der Anmeldung: **14.03.2018**
(21) Anmeldenummer: 16188562.9
(22) Anmeldetag: 13.09.2016
(51) Int. Cl.: G05B 19/416

(54) **NUMERISCHE STEUERUNG MIT ABSPEICHERUNG VON OVERRIDESIGNALEN**

(71) Anmelder: Siemens Aktiengesellschaft, 80333 München (DE)
(72) Erfinder: Goffredo, Tony, 71149 Bondorf (DE); Spielmann, Ralf, 70569 Stuttgart (DE)

(57) **Zusammenfassung**

Eine numerische Steuerung (3) arbeitet unter Kontrolle eines Betriebssystems (4) ein Nutzprogramm (6) ab, das eine Abfolge von Nutzbefehlen (7) enthält. Sie nimmt während der Abarbeitung des Nutzprogramms (6) von einer Bedienperson (8) kontinuierlich ein Overridesignal (OR1, OR2) entgegen. Die numerische Steuerung (3) ermittelt anhand der Nutzbefehle (7) für eine Anzahl von lagegeregelten Achsen (A1 bis A3) einer von ihr gesteuerten Maschine jeweils Lagesollwerte (x1* bis x3*) und deren Änderungsgeschwindigkeiten und/oder für mindestens eine drehzahlgeregelte Achse (N1) der Maschine Drehzahlsollwerte (n1*). Sie steuert die Maschine entsprechend den ermittelten Lage- (x1* bis x3*) und Drehzahlsollwerten (n1*). Bei der Ermittlung der Änderungsgeschwindigkeiten für die Lagesollwerte (x1* bis x3*) und/oder der Drehzahlsollwerte (n1*) berücksichtigt die numerische Steuerung (3) den jeweils aktuellen Wert des Overridesignals (OR1, OR2). Zumindest immer dann, wenn das Overridesignal (OR1, OR2) einen von 100 % verschiedenen Wert aufweist, speichert die numerische Steuerung (3) das Overridesignal (OR1, OR2) unter Zuordnung zum jeweiligen Nutzbefehl (7) ab, so dass anhand der abgespeicherten Overridesignale (OR1, OR2) und der zugeordneten Nutzbefehle (7) die jeweiligen unter Berücksichtigung der entgegengenommenen Overridesignale (OR1, OR2) ermittelten Änderungsgeschwindigkeiten der Lagesollwerte (x1* bis x3*) und/oder die jeweiligen unter Berücksichtigung der entgegengenommenen Overridesignale (OR1, OR2) ermittelten Drehzahlsollwerte (n1*) rekonstruierbar sind.

## Beschreibung

Die vorliegende Erfindung geht aus von einem Betriebsverfahren für eine numerische Steuerung,
- wobei die numerische Steuerung unter Kontrolle eines Betriebssystems ein Nutzprogramm abarbeitet, das eine Abfolge von Nutzbefehlen enthält,
- wobei die numerische Steuerung während der Abarbeitung des Nutzprogramms von einer Bedienperson über eine Mensch-Maschine-Schnittstelle kontinuierlich ein Overridesignal entgegennimmt,
- wobei die numerische Steuerung anhand der Nutzbefehle für eine Anzahl von lagegeregelten Achsen einer von der numerischen Steuerung gesteuerten Maschine jeweils Lagesollwerte und deren Änderungsgeschwindigkeiten und/oder für mindestens eine drehzahlgeregelte Achse der Maschine Drehzahlsollwerte ermittelt und die Maschine entsprechend den ermittelten Lage- und Drehzahlsollwerten steuert,
- wobei die numerische Steuerung bei der Ermittlung der Änderungsgeschwindigkeiten für die Lagesollwerte und/oder der Drehzahlsollwerte den jeweils aktuellen Wert des Overridesignals berücksichtigt.

Die vorliegende Erfindung geht weiterhin aus von einem Betriebssystem, das Maschinencode umfasst, der von einer numerischen Steuerung abarbeitbar ist, wobei die Abarbeitung des Maschinencodes durch die numerische Steuerung bewirkt, dass die numerische Steuerung ein derartiges Betriebsverfahren ausführt.

Die vorliegende Erfindung geht weiterhin aus von einer numerischen Steuerung, wobei die numerische Steuerung mit einem derartigen Betriebssystem programmiert ist, so dass sie im Betrieb ein derartiges Betriebsverfahren ausführt.

Die vorliegende Erfindung geht weiterhin aus von einer Maschine,
- wobei die Maschine eine Anzahl von lagegeregelten Achsen und/oder mindestens eine drehzahlgeregelte Achse aufweist,
- wobei die Maschine eine numerische Steuerung aufweist, von der die lagegeregelten Achsen und/oder die mindestens eine drehzahlgeregelte Achse gesteuert werden.

Die vorliegende Erfindung geht weiterhin aus von einem Nutzprogramm,
- wobei das Nutzprogramm eine Abfolge von Nutzbefehlen enthält,
- wobei das Nutzprogramm von einer numerischen Steuerung unter Kontrolle eines Betriebssystems abarbeitbar ist, so dass von der numerischen Steuerung anhand der Nutzbefehle für eine Anzahl von lagegeregelten Achsen einer von der numerischen Steuerung gesteuerten Maschine jeweils Lagesollwerte und deren Änderungsgeschwindigkeiten und/oder für mindestens eine drehzahlgeregelte Achse der Maschine Drehzahlsollwerte ermittelbar sind.

Die obengenannten Gegenstände sind allgemein bekannt.

Bei der Herstellung von Werkstücken ist es gängige Praxis, ein Nutzprogramm (oftmals als Teileprogramm bezeichnet) zu erstellen, das die verschiedenen Achsen der Maschine automatisch und relativ zueinander koordiniert steuert. Im Idealfall funktioniert diese Vorgehensweise vollständig fehlerfrei. In der Praxis ist dies jedoch nicht stets gewährleistet. Die Ursachen hierfür können vielfältiger Natur sein. Beispielsweise können durch ein ungünstig eingespanntes Werkstück, ein unnötiges langes Werkzeug oder aufgrund anderer Umstände Schwingungen des Werkzeugs und/oder des Werkstücks auftreten. Derartige Schwingungen haben einen nachteiligen Einfluss auf die Fertigungsqualität.

In manchen Fällen kann die Ursache der Schwingungen durch eine andere Aufspannung des Werkstücks oder Verwendung eines anderen Werkzeugs behoben werden. In anderen Fällen ist dies nicht möglich. Dann muss auf den Fertigungsprozess selbst Einfluss genommen werden.

Konkret bei Fertigungen mit kleinen Losgrößen ist es daher gängige Praxis, dass eine Bedienperson den Fertigungsprozess überwacht und bei Bedarf korrigierend eingreift. Insbesondere kann die Bedienperson der numerischen Steuerung ein Overridesignal vorgeben, mittels dessen eine Verfahrgeschwindigkeit von lagegeregelten Achsen (im Ergebnis also die Änderungsgeschwindigkeiten der Lagesollwerte) verändert werden kann. Das Overridesignal kann beispielsweise einen Wert zwischen 0 % und 200 % annehmen. In analoger Weise ist es manchmal auch möglich, dass die Bedienperson der numerischen Steuerung ein anderes Overridesignal vorgeben kann, mittels dessen eine Drehzahl einer drehzahlgeregelten Achse (Spindelachse) verändert werden kann. Dieses Overridesignal kann beispielsweise einen Wert zwischen 50 % und 120 % annehmen. Es ist auch denkbar, dass die Bedienperson der numerischen Steuerung - unabhängig voneinander - beide Overridesignale vorgeben kann.

Insbesondere bei der erstmaligen Fertigung eines neuen Teils wird die Bedienperson daher kontinuierlich den Fertigungsprozess überwachen und hierbei - zunächst vorsorglich - die Hand am Override-Schalter halten, also an dem Schalter zum Vorgeben des Overridesignals.

Diese Vorgehensweise ist für die Bedienperson mühsam und ermüdend und darüber hinaus im Ergebnis fehlerträchtig. Weiterhin ist sie - insbesondere bei größeren, komplexen Bauteilen - sehr zeitaufwendig. Nach einer gewissen Zeit lässt auch die Konzentration der Bedienperson nach.

Ein weiterer Nachteil besteht darin, dass die numerische Steuerung bei einer erneuten Abarbeitung des Nutzprogramms - also der Fertigung eines weiteren Teils - zwar erneut das Nutzprogramm abarbeitet, es jedoch gegebenenfalls erneut erforderlich ist, der numerischen Steuerung zu den entsprechenden Zeitpunkten wiederum ein geeignetes Overridesignal vorzugeben.

Ein weiteres Problem sind zertifizierte Bauteile. Bei derartigen Bauteilen ist oftmals nicht nur relevant, auf welcher Maschine und mit welchem Nutzprogramm sie gefertigt wurden, sondern auch relevant, mit welchen weiteren Bearbeitungsparametern sie gefertigt werden. Zu den weiteren Bearbeitungsparametern gehören auch die Änderungsgeschwindigkeiten der Lageistwerte und die Drehzahlen von Spindelachsen. Ein Abweichen von den vorgegebenen Parametern kann dazu führen, dass das tatsächlich gefertigte Teil nicht mehr der Zertifizierung entspricht.

Änderungsgeschwindigkeiten für die Lagesollwerte (und damit im Ergebnis auch für die Lageistwerte) und Drehzahlsollwerte (und damit im Ergebnis auch die Drehzahlen) sind als solche zwar bereits durch das Nutzprogramm definiert und festgelegt. Die Bedienperson hat jedoch durch die Vorgabe von Overridesignalen nach wie vor die Möglichkeit, die Änderungsgeschwindigkeit der Lagesollwerte und/oder die Drehzahlen zu variieren.

Die Gründe, aufgrund derer ein von 100 % verschiedenes Overridesignal vorgegeben wird, können vielfältiger Natur sein. Beispielsweise kann beim Einfahren eines Werkstücks aus technologischen Gründen eine Verringerung der Verfahrgeschwindigkeit sinnvoll gewesen sein. Danach wurde vergessen, den Override-Schalter wieder auf 100 % zurückzustellen. Auch andere Gründe sind denkbar und möglich.

Zur Behebung dieses Problems ist es theoretisch denkbar, den Override-Schalter zu entfernen oder zu blockieren. In der Praxis wird dieser Weg jedoch nur in ganz seltenen Fällen beschritten, da die Bedienperson stets eine Möglichkeit wünscht, bei Bedarf in den Fertigungsprozess eingreifen zu können. Auch wird der Override-Schalter in bestimmten Bediensituationen benötigt, so dass er oftmals nicht einfach weggelassen oder blockiert werden kann.

Die Aufgabe der vorliegenden Erfindung besteht darin, die Probleme des Standes der Technik zu lösen.

Die Aufgabe wird durch ein Betriebsverfahren für eine numerische Steuerung mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet, dass die numerische Steuerung zumindest immer dann, wenn das Overridesignal einen von 100 % verschiedenen Wert aufweist, das Overridesignal unter Zuordnung zum jeweiligen Nutzbefehl abspeichert, so dass anhand der abgespeicherten Overridesignale und der zugeordneten Nutzbefehle die jeweiligen unter Berücksichtigung der entgegengenommenen Overridesignale ermittelten Änderungsgeschwindigkeiten der Lagesollwerte und/oder die jeweiligen unter Berücksichtigung der entgegengenommenen Overridesignale ermittelten Drehzahlsollwerte rekonstruierbar sind.

Die Overridesignale werden also im Sinne einer kontinuierlichen Mitprotokollierung mit aufgezeichnet. Die gesamte Historie der Overridesignale während der Abarbeitung des Nutzprogramms steht somit zur Verfügung.

Die erfindungsgemäße Vorgehensweise entlastet die Bedienperson bei der Fertigung mehrerer gleichartiger Teile. Denn aufgrund der Rekonstruierbarkeit der jeweiligen unter Berücksichtigung der entgegengenommenen Overridesignale ermittelten Änderungsgeschwindigkeiten der Lagesollwerte und/oder der jeweiligen unter Berücksichtigung der entgegengenommenen Overridesignale ermittelten Drehzahlsollwerte ist es möglich, dass die numerische Steuerung während einer erneuten Abarbeitung des Nutzprogramms bei der erneuten Ermittlung der Änderungsgeschwindigkeiten für die Lagesollwerte und/oder der Drehzahlsollwerte die bei der vorherigen Abarbeitung des Nutzprogramms abgespeicherten Overridesignale bei dem jeweils zugeordneten Nutzbefehl berücksichtigt.

Die erfindungsgemäße Vorgehensweise verbessert darüber hinaus die Sicherung der Produktqualität. Denn aufgrund der Rekonstruierbarkeit der jeweiligen unter Berücksichtigung der entgegengenommenen Overridesignale ermittelten Änderungsgeschwindigkeiten der Lagesollwerte und/oder der jeweiligen unter Berücksichtigung der entgegengenommenen Overridesignale ermittelten Drehzahlsollwerte ist es möglich, auch nachträglich noch festzustellen, mit welchen tatsächlichen Änderungsgeschwindigkeiten der Lagesollwerte und/oder welchen tatsächlichen Drehzahlsollwerten ein bestimmtes Teil gefertigt wurde.

Im Rahmen der Berücksichtigung der abgespeicherten Overridesignale bei der erneuten Ermittlung der Änderungsgeschwindigkeiten für die Lagesollwerte und/oder der Drehzahlsollwerte ist es möglich, dass die numerische Steuerung die abgespeicherten Overridesignale direkt als Overridesignale berücksichtigt. In diesem Fall erfolgt sozusagen ein einmaliges Einlernen des zeitlichen Verlaufs des Overridesignals.

Es ist möglich, die abgespeicherten Overridesignale ausschließlich zum Einlernen des zeitlichen Verlaufs des Overridesignals zu verwenden. Es ist jedoch alternativ ebenso möglich, die abgespeicherten Overridesignale zusätzlich im Sinne einer Dokumentierung der Fertigungsparameter des jeweils gefertigten Teils zu verwenden. In diesem Fall wird das Betriebsverfahren - zusätzlich zur Verwendung der abgespeicherten Overridesignale als Overridesignale - dadurch ausgestaltet,
- dass die numerische Steuerung während der erneuten Abarbeitung des Nutzprogramms zumindest immer dann, wenn das abgespeicherte Overridesignal einen von 100 % verschiedenen Wert aufweist, das abgespeicherte Overridesignal unter Zuordnung zum jeweiligen Nutzbefehl erneut abspeichert, so dass anhand der erneut abgespeicherten Overridesignale und der zugeordneten Nutzbefehle die jeweiligen unter Berücksichtigung der erneut abgespeicherten Overridesignale ermittelten Änderungsgeschwindigkeiten der Lagesollwerte und/oder die jeweiligen unter Berücksichtigung der erneut abgespeicherten Overridesignale ermittelten Drehzahlsollwerte rekonstruierbar sind, und
- dass die im Rahmen der vorherigen Abarbeitung des Nutzprogramms abgespeicherten Overridesignale erhalten bleiben.

Auch wenn im Rahmen der wiederholten Fertigung von gleichartigen Teilen stets dieselben Overridesignale verwendet werden, wird somit also dennoch für jedes gefertigte Teil jeweils ein eigenes Protokoll der verwendeten Overridesignale erzeugt.

Alternativ zu einer Berücksichtigung der abgespeicherten Overridesignale als jeweils aktuellen Wert des Overridesignals ist es möglich,
- dass die numerische Steuerung während einer erneuten Abarbeitung des Nutzprogramms von der Bedienperson über die Mensch-Maschine-Schnittstelle erneut kontinuierlich ein Overridesignal entgegennimmt,
- dass die numerische Steuerung bei der erneuten Ermittlung der Änderungsgeschwindigkeiten für die Lagesollwerte und/ oder der Drehzahlsollwerte die bei der vorherigen Abarbeitung des Nutzprogramms dem jeweiligen Nutzbefehl zugeordneten, abgespeicherten Overridesignale bei dem jeweiligen Nutzbefehl zusätzlich zum jeweils aktuellen Wert des von der Bedienperson entgegengenommenen Overridesignals berücksichtigt und
- dass die numerische Steuerung zumindest immer dann, wenn die gleichzeitige Berücksichtigung sowohl des abgespeicherten Overridesignals als auch des erneut entgegengenommenen Overridesignals zu einem effektiven Overridesignal führt, das einen von 100 % verschiedenen Wert aufweist, das effektive Overridesignal unter Zuordnung zum jeweiligen Nutzbefehl abspeichert, so dass anhand der abgespeicherten effektiven Overridesignale und der zugeordneten Nutzbefehle die jeweiligen unter Berücksichtigung der effektiven Overridesignale ermittelten Änderungsgeschwindigkeiten der Lagesollwerte und die jeweiligen unter Berücksichtigung der effektiven Overridesignale ermittelten Drehzahlsollwerte rekonstruierbar sind.

Durch diese Vorgehensweise wird es möglich, den zeitlichen Verlauf des Overridesignals in mehreren Stufen nach und nach immer besser einzulernen.

Im Falle der Abspeicherung der effektiven Overridesignale ist es möglich, dass die numerische Steuerung die bereits abgespeicherten Overridesignale durch die effektiven Overridesignale überschreibt. In diesem Fall werden die abgespeicherten Overridesignale ausschließlich zum Einlernen des zeitlichen Verlauf des Overridesignals verwendet. Alternativ ist es möglich, dass die numerische Steuerung die effektiven Overridesignale zusätzlich zu den bereits abgespeicherten Overridesignalen abspeichert. Im letztgenannten Fall somit also dennoch für jedes gefertigte Teil jeweils ein eigenes Protokoll der verwendeten Overridesignale erzeugt.

Alternativ zu einer Berücksichtigung der abgespeicherten Overridesignale im Rahmen der Ermittlung der Änderungsgeschwindigkeiten für die Lagesollwerte und/oder der Drehzahlsollwerte ist es möglich,
- dass die numerische Steuerung während einer erneuten Abarbeitung des Nutzprogramms von der Bedienperson über die Mensch-Maschine-Schnittstelle erneut kontinuierlich ein Overridesignal entgegennimmt,
- dass die numerische Steuerung bei der Ermittlung der Änderungsgeschwindigkeiten für die Lagesollwerte und/oder der Drehzahlsollwerte erneut den jeweils aktuellen Wert des Overridesignals berücksichtigt,
- dass die numerische Steuerung zumindest immer dann, wenn das erneut entgegengenommene Overridesignal einen von 100 % verschiedenen Wert aufweist, das erneut entgegengenommene Overridesignal unter Zuordnung zum jeweiligen Nutzbefehl abspeichert, so dass anhand der erneut entgegengenommenen Overridesignale und der zugeordneten Nutzbefehle die jeweiligen unter Berücksichtigung der erneut entgegengenommenen Overridesignale ermittelten Änderungsgeschwindigkeiten der Lagesollwerte und/oder die jeweiligen unter Berücksichtigung der erneut entgegengenommenen Overridesignale ermittelten Drehzahlsollwerte rekonstruierbar sind, und
- dass die im Rahmen der vorherigen Abarbeitung des Nutzprogramms abgespeicherten Overridesignale erhalten bleiben.

In diesem Fall erfolgt also zwar kein Einlernen der Overridesignale. Im Rahmen der wiederholten Fertigung von gleichartigen Teilen wird aber für jedes gefertigte Teil jeweils ein eigenes Protokoll der verwendeten Overridesignale erzeugt. Dies gilt unabhängig davon, ob für die einzelnen Teile dieselben oder voneinander verschiedene Overridesignale verwendet werden. Somit ist für jedes gefertigte Teil individuell nachvollziehbar, mit welchen Änderungsgeschwindigkeiten der Lagesollwerte und/oder welchen Drehzahlsollwerten es gefertigt wurde.

Es ist möglich, dass die numerische Steuerung die Overridesignale immer abspeichert, also auch dann, wenn sie einen Wert von 100 % aufweisen. Vorzugsweise speichert die numerische Steuerung die Overridesignale jedoch zwar immer dann, aber auch nur dann ab, wenn sie einen von 100 % verschiedenen Wert aufweisen. Dadurch kann die Dateigröße für die Overridesignale minimiert werden. Insbesondere weisen die Overridesignale oftmals nur für einige wenige Nutzbefehle einen von 100 % verschiedenen Wert auf.

Es ist möglich, dass der Override-Schalter stets aktiv ist, also stets eine Vorgabe eines Overridesignals möglich ist. In einer bevorzugten Ausgestaltung ist es jedoch möglich,
- dass die numerische Steuerung von der Bedienperson vor einer jeweiligen Abarbeitung des Nutzprogramms einen Aktivierungsbefehl entgegennimmt und
- dass die numerische Steuerung in Abhängigkeit von dem Aktivierungsbefehl bei der erneuten Abarbeitung des Nutzprogramms die während der erneuten Abarbeitung des Nutzprogramms vorgegebenen Overridesignale bei der Ermittlung der Änderungsgeschwindigkeiten für die Lagesollwerte und/oder der Drehzahlsollwerte berücksichtigt oder nicht berücksichtigt.

Der Bedienperson wird somit die Möglichkeit gegeben, den Override-Schalter zu deaktivieren. Dies kann insbesondere dann sinnvoll sein, wenn das Einlernen des Override-Verlaufs beendet ist.

In einer weiteren bevorzugten Ausgestaltung gibt die numerische Steuerung ein optisches, akustisches und/oder haptisches Signal an die Bedienperson aus, wenn und sobald die numerische Steuerung von der Bedienperson ein Overridesignal entgegennimmt, das einen von 100 % verschiedenen Wert aufweist. Die Bedienperson erhält somit eine direkte Rückkopplung, wenn sie ein von 100 % verschiedenes Overridesignal vorgibt.

Es ist möglich, dass das an die Bedienperson ausgegebene Signal rein binärer Natur ist. Vorzugsweise bestimmt die numerische Steuerung das Signal jedoch derart, dass anhand des Signals das Vorzeichen und/oder das Ausmaß der Abweichung des Overridesignals von 100 % erkennbar ist.

Die Aufgabe wird weiterhin durch ein Betriebssystem mit den Merkmalen des Anspruchs 11 gelöst. Erfindungsgemäß bewirkt die Abarbeitung des Maschinencodes durch die numerische Steuerung bewirkt, dass die numerische Steuerung ein erfindungsgemäßes Betriebsverfahren ausführt.

Die Aufgabe wird weiterhin durch eine numerische Steuerung mit den Merkmalen des Anspruchs 12 gelöst. Erfindungsgemäß ist die numerische Steuerung mit einem erfindungsgemäßen Betriebssystem programmiert, so dass sie im Betrieb ein erfindungsgemäßes Betriebsverfahren ausführt.

Die Aufgabe wird weiterhin durch eine Maschine mit den Merkmalen des Anspruchs 13 gelöst. Erfindungsgemäß ist die numerische Steuerung erfindungsgemäß ausgebildet.

Die Aufgabe wird weiterhin durch eine Kombination eines Nutzprogramms mit einer Sequenz von Overridesignalen mit den Merkmalen des Anspruchs 14 gelöst. Erfindungsgemäß wird ein Nutzprogramm der eingangs erläuterten Art durch die Sequenz von Overridesignalen ergänzt, wobei die Overridesignale der Sequenz von Overridesignalen jeweils einem der Nutzbefehle zugeordnet sind und die Sequenz von Overridesignalen zumindest dann jeweils ein Overridesignal enthält, wenn das jeweilige Overridesignal einen von 100 % verschiedenen Wert aufweist, so dass anhand der abgespeicherten Overridesignale und der zugeordneten Nutzbefehle geänderte Änderungsgeschwindigkeiten der Lagesollwerte und/oder geänderte Drehzahlsollwerte für die einzelnen Nutzbefehle rekonstruierbar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine und eine numerische Steuerung,
- FIG 2: ein Nutzprogramm,
- FIG 3: ein Ablaufdiagramm,
- FIG 4: eine Sequenz von Overridesignalen,
- FIG 5: eine Modifikation von FIG 1,
- FIG 6: ein Ablaufdiagramm,
- FIG 7: ein Ablaufdiagramm,
- FIG 8: ein Ablaufdiagramm,
- FIG 9: ein Ablaufdiagramm und
- FIG 10: ein Ablaufdiagramm.

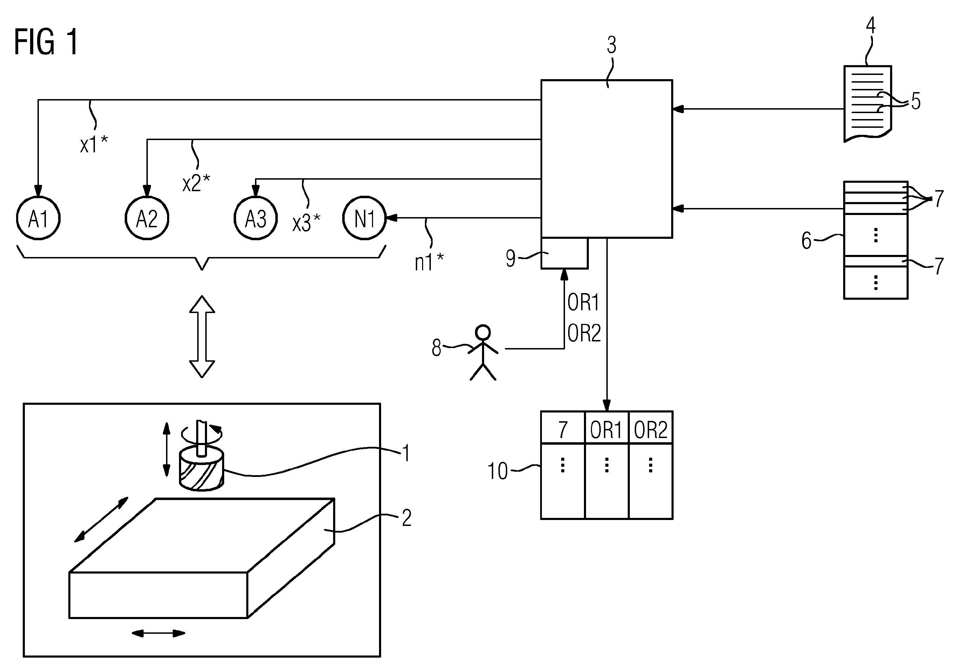

Gemäß FIG 1 weist eine Maschine - beispielsweise eine Werkzeugmaschine, prinzipiell aber auch eine beliebige andere Produktionsmaschine - eine Anzahl von lagegeregelten Achsen A1 bis A3 auf. Rein beispielhaft sind in FIG 1 drei lagegeregelte Achsen A1 bis A3 dargestellt. Die Anzahl an lagegeregelten Achsen A1 bis A3 kann nach Bedarf auch größer oder kleiner sein. In der Regel sind jedoch mindestens zwei lagegeregelte Achsen A1 bis A3 vorhanden. Oftmals sind drei, vier, fünf oder mehr lagegeregelte Achsen A1 bis A3 vorhanden. Mittels der lagegeregelten Achsen A1 bis A3 kann beispielsweise, wie in FIG 1 durch Doppelpfeile angedeutet ist, ein Werkzeug 1 relativ zu einem zu bearbeitenden Werkstück 2 lagegeregelt positioniert werden. Es kann zusätzlich auch die Orientierung des Werkzeugs 1 relativ zum Werkstück 2 lagegeregelt einstellbar sein. Oftmals weist die Maschine weiterhin mindestens eine drehzahlgeregelte Achse N1 auf. In manchen Fällen kann die drehzahlgeregelte Achse N1 jedoch auch entfallen. Mittels der drehzahlgeregelten Achse N1 kann beispielsweise die Drehzahl des Werkzeugs 1 eingestellt werden.

Die Maschine weist weiterhin eine numerische Steuerung 3 auf, welche die vorhandenen Achsen A1 bis A3, N1 - also je nach Lage des Einzelfalls nur die lagegeregelten Achsen A1 bis A3, sowohl die lagegeregelten Achsen A1 bis A3 als auch die mindestens eine drehzahlgeregelte Achse N1 oder nur die mindestens eine drehzahlgeregelte Achse N1 - steuert. Die numerische Steuerung kann beispielsweise als CNC (computer numerical control) oder als MC (motion control) ausgebildet sein. Die numerische Steuerung 3 ist mit einem Betriebssystem 4 programmiert. Das Betriebssystem 4 wird oftmals auch als Echtzeit-Kernel bezeichnet. Das Betriebssystem 4 umfasst Maschinencode 5, der von der numerischen Steuerung 3 abarbeitbar ist. Aufgrund der Programmierung mit dem Betriebssystem 4 führt die numerische Steuerung 3 ein Betriebsverfahren aus, das nachstehend näher erläutert wird. Die Abarbeitung des Maschinencodes 5 durch die numerische Steuerung 3 bewirkt also die Ausführung des Betriebsverfahrens durch die numerische Steuerung 3.

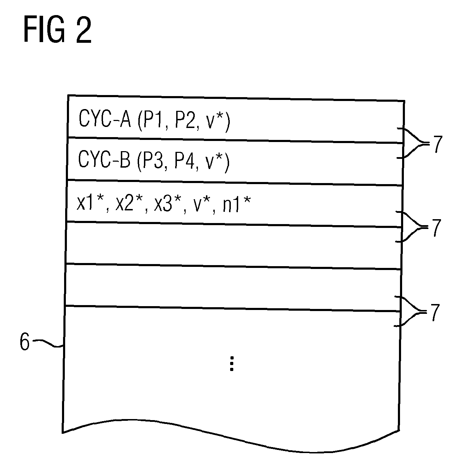

Aufgrund der Abarbeitung des Maschinencodes 5 (und damit unter Kontrolle des Betriebssystems 4) arbeitet die numerische Steuerung 3 ein Nutzprogramm 6 ab. Das Nutzprogramm 6 - oftmals auch als Teileprogramm bezeichnet - umfasst gemäß FIG 2 eine Vielzahl von Programmzeilen, die - mit Ausnahme von nicht ausgeführten Kommentaren - jeweils einen Nutzbefehl 7 für die numerische Steuerung 3 darstellen und von der numerischen Steuerung 3 einzeln und nacheinander abgearbeitet werden. Manche der Nutzbefehle 7 sind Zyklen, andere Verfahrbefehle. Zyklen sind Befehle, die von der numerischen Steuerung 3 selbst interpretiert und in eine Abfolge von Lage- und Drehzahlsollwerten x1* bis x3*, n1* für die von der numerischen Steuerung 3 gesteuerten Achsen A1 bis A3, N1 umgesetzt werden. Sie weisen in der Regel, wie in FIG 2 für die Zyklen CYC-A und CYC-B dargestellt ist, jeweils zusätzliche Parameter P1 bis P4 auf. Verfahrbefehle sind Befehle, die für die von der numerischen Steuerung 3 gesteuerten Achsen A1 bis A3, N1 jeweils einen konkreten Sollwert x1* bis x3*, n1* enthalten. Dies ist in FIG 2 für einen einzelnen Verfahrbefehl dargestellt. Die Nutzbefehle 7 umfassen weiterhin jeweils einen Sollwert v* für eine Vorschubgeschwindigkeit, anhand derer die numerische Steuerung 3 eine jeweilige Änderungsgeschwindigkeit für die lagegeregelten Sollwerte x1* bis x3* ermitteln kann (und dies auch tut). Dieser Sollwert v* wird nachfolgend kurz als Sollvorschub v* bezeichnet

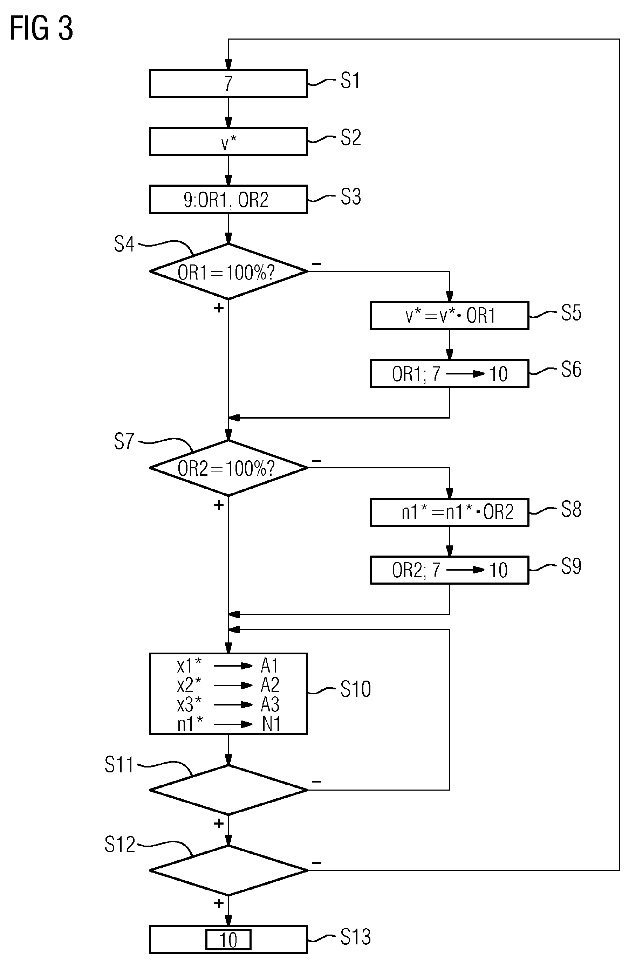

Im Rahmen der Abarbeitung des Nutzprogramms 6 wählt die numerische Steuerung 3 entsprechend der Darstellung in FIG 3 somit in einem Schritt S1 jeweils einen Nutzbefehl 7 aus. In einem Schritt S2 ermittelt die numerische Steuerung den zugehörigen Sollvorschub v*. Weiterhin nimmt die numerische Steuerung 3 in einem Schritt S3 von einer Bedienperson 8 über eine Mensch-Maschine-Schnittstelle 9 (mindestens) ein Overridesignal OR1, OR2 entgegen. Die Mensch-Maschine-Schnittstelle 9 kann beispielsweise als Maschinensteuertafel ausgebildet sein. Gemäß der Darstellung in FIG 1 nimmt die numerische Steuerung 3 beide Overridesignale OR1, OR2 entgegen. Prinzipiell ist es jedoch ausreichend, wenn die numerische Steuerung 3 nur eines der beiden Overridesignale OR1, OR2 entgegennimmt.

In einem Schritt S4 prüft die numerische Steuerung 3, ob das Overridesignal OR1 einen Wert von 100 % aufweist. Wenn dies der Fall ist, werden Schritte S5 und S6 übersprungen. Anderenfalls werden die Schritte S5 und S6 ausgeführt. Im Schritt S5 skaliert die numerische Steuerung 3 den Sollvorschub v* mit dem Wert des Overridesignals OR1. Im Schritt S6 ordnet die numerische Steuerung 3 den Wert des Overridesignals OR1 dem im Schritt S1 ausgewählten Nutzbefehl 7 zu und speichert ihn - einschließlich der Zuordnung - in einer Datei 10 ab.

In analoger Weise prüft die numerische Steuerung 3 in einem Schritt S7, ob das Overridesignal OR2 einen Wert von 100 % aufweist. Wenn dies der Fall ist, werden Schritte S8 und S9 übersprungen. Anderenfalls werden die Schritte S8 und S9 ausgeführt. Im Schritt S8 skaliert die numerische Steuerung 3 den Drehzahlsollwert n1* mit dem Wert des Overridesignals OR2. Im Schritt S9 ordnet die numerische Steuerung 3 den Wert des Overridesignals OR2 dem im Schritt S1 ausgewählten Nutzbefehl 7 zu und speichert ihn - einschließlich der Zuordnung - in der Datei 10 ab.

In einem Schritt S10 steuert die numerische Steuerung 3 die von ihr gesteuerten Achsen A1 bis A3, N1 entsprechend den für den im Schritt S1 ausgewählten Nutzbefehl 7 ermittelten Sollwerten x1* bis x3* (einschließlich des gegebenenfalls skalierten Sollvorschubs v*) und n1* an.

In einem Schritt S11 prüft die numerische Steuerung 3, ob die Abarbeitung des im Schritt S1 ausgewählten Nutzbefehls 7 bereits beendet ist. Wenn dies nicht der Fall ist, geht die numerische Steuerung 3 zum Schritt S10 zurück. Anderenfalls geht die numerische Steuerung 3 zu einem Schritt S12 über. Im Schritt S12 prüft die numerische Steuerung 3, ob sie das Nutzprogramm 6 bereits vollständig abgearbeitet hat. Wenn dies nicht der Fall ist, geht die numerische Steuerung 3 zum Schritt S1 zurück und wählt dort den nächsten auszuführenden Nutzbefehl 7 aus. Wenn dies hingegen der Fall ist, ist die (einmalige) Abarbeitung des Nutzprogramms 6 beendet. In diesem Fall geht die numerische Steuerung 3 zu einem Schritt S13 über, in dem sie die Abspeicherung der Overridesignale OR1, OR2 abschließt. Insbesondere erfolgt die Abspeicherung der Overridesignale OR1, OR2 als eigenständige, dem Nutzprogramm 6 zugeordnete Datei 10, die als Einheit verwaltet wird, der ein Name zugewiesen wird und die beispielsweise auch kopiert oder exportiert werden kann.

Aus den obigen Ausführungen ist zum einen ersichtlich, dass die numerische Steuerung 3 die Nutzbefehle 7 sequenziell und nacheinander ausführt. Zum anderen ist ersichtlich, dass die numerische Steuerung während der Abarbeitung des Nutzprogramms 6 die Overridesignale OR1, OR2 kontinuierlich entgegennimmt.

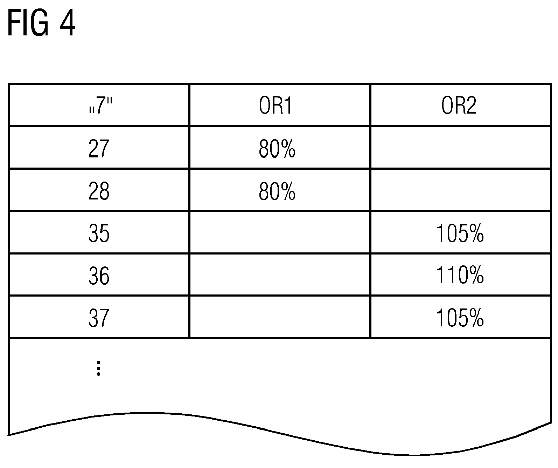

Durch die wiederholte Ausführung der Schritte S1 bis S12 werden die Overridesignale OR1, OR2 somit stets dann abgespeichert, wenn sie einen von 100 % verschiedenen Wert aufweisen. FIG 4 zeigt ein mögliches Ergebnis. FIG 4 zeigt in einer einfachen Implementierung der vorliegenden Erfindung in der linken Spalte in aufsteigender Folge die Nummern von Nutzbefehlen 7 (also deren Stelle im Nutzprogramm 6), in der mittleren Spalte den jeweiligen Wert des einen Overridesignals OR1 (sofern dieser von 100 % verschieden ist) und in der rechten Spalte den jeweiligen Wert des anderen Overridesignals OR2 (sofern dieser von 100 % verschieden ist). Die angegebenen Zahlenwerte sind - sowohl für die Nummern der Nutzbefehle 7 als auch für die Werte der Overridesignale OR1 und OR2 - selbstverständlich rein beispielhaft. Sie zeigen jedoch, dass die numerische Steuerung 3 die Overridesignale OR1, OR2 zwar immer dann, aber auch nur dann abspeichert, wenn sie einen von 100 % verschiedenen Wert aufweisen.

Die Speicherung in der Form gemäß FIG 4 führt stets zu vollständig befriedigenden Ergebnissen, wenn die Overridesignale OR1, OR2 bei Verfahrbefehlen einen von 100 % verschiedenen Wert aufweisen. Wenn die Overridesignale OR1, OR2 bei einem Zyklusbefehl einen von 100 % verschiedenen Wert aufweisen, ist es möglich, dass diese Vorgehensweise im Einzelfall nicht ausreicht. In diesem Fall kann jedoch gegebenenfalls bei der Abspeicherung der Overridesignale OR1, OR2 mit vermerkt werden, für welchen Teil des jeweiligen Zyklusbefehls das jeweilige Overridesignal OR1, OR2 gültig ist.

Anhand der abgespeicherten Sequenz von Overridesignalen OR1, OR2 und der jeweils zugeordneten Nutzbefehle 7 - die aufgrund der Zuordnung gemäß FIG 4 bekannt sind - ist somit rekonstruierbar, für welche der Nutzbefehle 7 die durch den jeweiligen Nutzbefehl 7 als solchen definierten Werte für den Sollvorschub v* und den Drehzahlsollwert n1* verwendet wurden und für welche der Nutzbefehle 7 diese Werte v*, n1* durch die entsprechenden Overridesignale OR1, OR2 modifiziert wurden. Die Zahlenwerte für die Overridesignale OR1, OR2 geben (selbstverständlich) auch die Art und Weise der Modifikation (nämlich eine einfache Skalierung) an. Es ist somit rekonstruierbar, mit welchen tatsächlichen Sollwerten v*, n1* für den Vorschub und die Drehzahl die entsprechende Bearbeitung des Werkstücks 2 durch das Werkzeug 1 erfolgte.

Im Rahmen einer erneuten Abarbeitung des Nutzprogramms 6 durch die numerische Steuerung 3 kann - selbstverständlich - dieselbe, obenstehend in Verbindung mit den FIG 1 bis 4 erläuterte Vorgehensweise ergriffen werden. Hierbei sind jedoch verschiedene Ausgestaltungen möglich.

Im einfachsten Fall wird die zuvor abgespeicherte Datei 10 mit der neuen Sequenz von Overridesignalen OR1, OR2 überschrieben. In der Regel ist dies jedoch nicht sinnvoll. Denn dann steht jeweils nur für das zuletzt bearbeitete Werkstück 2 die Information zur Verfügung, wie es bearbeitet wurde.

Vorzugsweise wird daher eine der weiteren, nachfolgend mit den weiteren FIG erläuterten Ausgestaltungen realisiert.

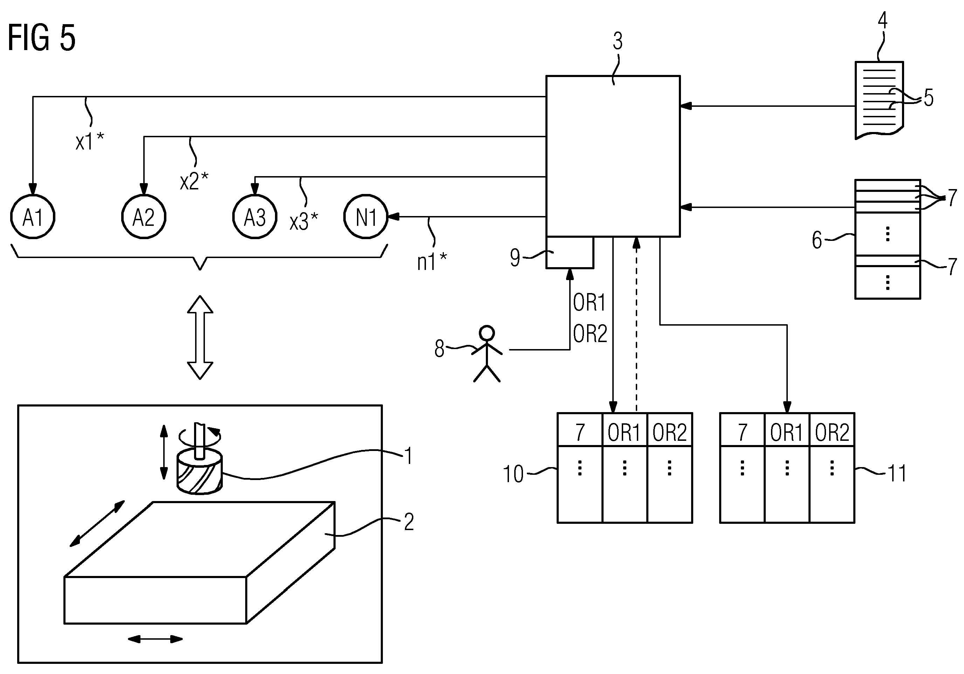

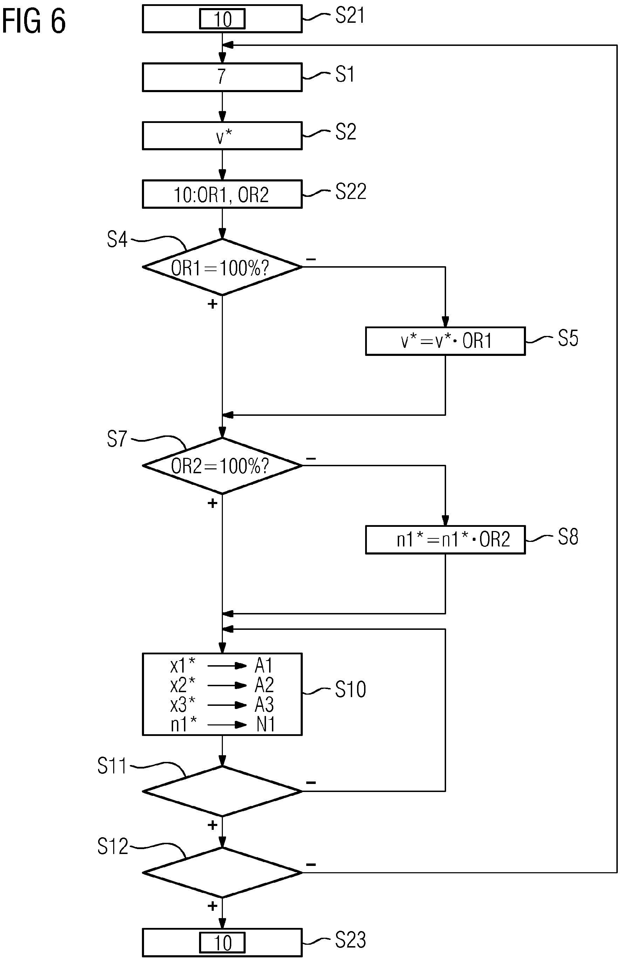

Die FIG 5 und 6 zeigen eine erste mögliche Ausgestaltung. FIG 5 zeigt hierbei eine auf FIG 1 aufbauende Darstellung der Maschine und der numerischen Steuerung, FIG 6 das zugehörige Ablaufdiagramm.

Im Rahmen der Ausgestaltung der FIG 5 und 6 ist der Aufbau der Maschine und der numerischen Steuerung (zunächst) unverändert. Es wird jedoch vorausgesetzt, dass das Nutzprogramm 6 bereits (mindestens) einmal abgearbeitet wurde und dementsprechend die Datei 10 bereits existiert.

In diesem Fall ist es möglich, dass in dem Ablaufdiagramm gemäß FIG 6 im Vergleich zur Ausgestaltung gemäß FIG 3 dem Schritt S1 ein Schritt S21 vorgeordnet ist und ferner der Schritt S3 durch einen Schritt S22 ersetzt ist. Weiterhin ist es in diesem Fall möglich (aber nicht zwingend erforderlich), dass die Schritte S6 und S9 entfallen. Im Schritt S21, das heißt vor der erneuten Abarbeitung des Nutzprogramms 6, wird die - nunmehr bereits vorhandene - Datei 10 geöffnet. Falls das Nutzprogramm 6 bereits mehrmals abgearbeitet wurde, können - dies wird aus späteren Ausführungen ersichtlich werden - auch mehrere Dateien 10 bereits existieren. In diesem Fall wird im Schritt S21 auch ausgewählt, welche dieser Dateien 10 geöffnet wird. Während der erneuten Abarbeitung des Nutzprogramms 6 liest die numerische Steuerung 3 die Datei 10 aus. Dies ist in FIG 5 durch einen gestrichelten Pfeil von der Datei 10 zur numerischen Steuerung 3 angedeutet. Der numerischen Steuerung 3 steht somit die Information zur Verfügung, für welche Nutzbefehle 7 in der Datei 10 welche Overridesignale OR1, OR2 gespeichert sind. Während der erneuten Abarbeitung des Nutzprogramms 6 ermittelt die numerische Steuerung 3 somit anhand der aus der Datei 10 ausgelesenen Overridesignale OR1, OR2 und der jeweils zugeordneten Nutzbefehle 7, wann und in welchem Umfang sie die durch die Nutzbefehle 7 definierten Werte für den Sollvorschub v* und die Solldrehzahl n1* durch die entsprechenden Overridesignale OR1, OR2 skalieren muss. Im Ergebnis berücksichtigt die numerische Steuerung 3 somit während der erneuten Abarbeitung des Nutzprogramms 6 bei der erneuten Ermittlung der Sollvorschübe v* und der Drehzahlsollwerte n1* als Overridesignale OR1, OR2 diejenigen Overridesignale OR1, OR2, die bei der vorherigen Abarbeitung des Nutzprogramms 6 dem jeweiligen Nutzbefehl 7 zugeordnet wurden und unter Zuordnung zu dem jeweiligen Nutzbefehl 7 in der Datei 10 abgespeichert wurden. Die Berücksichtigung erfolgt auf die gleiche Art und Weise, wie wenn die Overridesignale OR1, OR2 direkt von der Bedienperson 8 vorgegeben würden. Schließlich ist der Schritt S13 durch einen Schritt S23 ersetzt. Im Schritt S23 wird die Datei 10 wieder geschlossen. Da im Schritt S22 nur ein Lesen der in der Datei 10 abgespeicherten Overridesignale OR1, OR2 erfolgt ist, ist der Inhalt der Datei 10 damit unverändert erhalten geblieben.

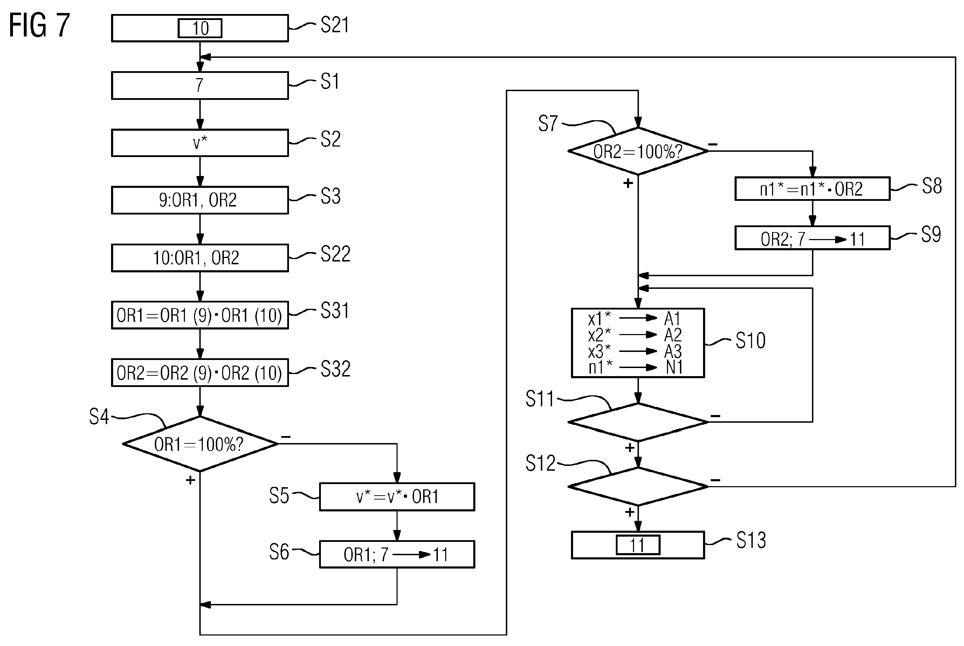

Es ist möglich, dass bei der erneuten Abarbeitung des Nutzprogramms 6 die Vorgabe von Overridesignalen OR1, OR2 durch die Bedienperson 8 blockiert ist. In diesem Fall bestimmen die abgespeicherten Overridesignale OR1, OR2 direkt und unmittelbar den effektiven Wert des jeweiligen Overridesignals OR1, OR2. Alternativ ist es möglich, dass die numerische Steuerung 3 auch während der erneuten Abarbeitung des Nutzprogramms 6 von der Bedienperson 8 über die Mensch-Maschine-Schnittstelle 9 jeweils Overridesignale OR1, OR2 entgegennimmt. In diesem Fall kann die Vorgehensweise von FIG 6 beispielsweise entsprechend FIG 7 ausgestaltet sein.

Gemäß FIG 7 ist - so wie in FIG 3 auch - der Schritt S3 vorhanden. Im Schritt S3 nimmt die numerische Steuerung 3 auch während der erneuten Abarbeitung des Nutzprogramms 6 von der Bedienperson 8 über die Mensch-Maschine-Schnittstelle 9 jeweils die Overridesignale OR1, OR2 entgegen. Da weiterhin jedoch auch der Schritt S22 vorhanden ist, stehen der numerischen Steuerung 3 nicht nur die von der Bedienperson 8 über die Mensch-Maschine-Schnittstelle 9 vorgegebenen Overridesignale OR1, OR2 zur Verfügung, sondern zusätzlich auch die in der Datei 10 bereits abgespeicherten Overridesignale OR1, OR2. Daher sind zusätzlich Schritte S31 und S32 vorhanden.

Im Schritt S31 ermittelt die numerische Steuerung 3 anhand des für den jeweiligen Nutzbefehl 7 abgespeicherten Overridesignals OR1 (falls für den jeweiligen Nutzbefehle 7 kein
Overridesignal OR1 abgespeichert ist, anhand des Wertes 100 %) in Verbindung mit dem aktuell von der Bedienperson 8 vorgegebenen Overridesignal OR1 ein resultierendes bzw. effektives Overridesignal OR1. Insbesondere multipliziert die numerische Steuerung 3 die beiden Overridesignale OR1 miteinander. Im Schritt S5 verwertet die numerische Steuerung 3 dann das im Schritt S31 ermittelte effektive Overridesignal OR1. In analoger Weise ermittelt die numerische Steuerung 3 im Schritt S32 anhand des für den jeweiligen Nutzbefehl 7 abgespeicherten Overridesignals OR2 (falls für den jeweiligen Nutzbefehle 7 kein Overridesignal OR2 abgespeichert ist, anhand des Wertes 100 %) in Verbindung mit dem aktuell von der Bedienperson 8 vorgegebenen Overridesignal OR2 ein resultierendes bzw. effektives Overridesignal OR2. Insbesondere multipliziert die numerische Steuerung 3 die beiden Overridesignale OR2 miteinander. Im Schritt S8 verwertet die numerische Steuerung 3 dann das im Schritt S32 ermittelte effektive Overridesignal OR2.

Die Schritte S6 und S9 können vom Ansatz her erhalten bleiben. Es werden jedoch nicht die von der Bedienperson 8 über die Mensch-Maschine-Schnittstelle 9 vorgegebenen Overridesignale OR1, OR2 abgespeichert, sondern die in den Schritten S31 und S32 ermittelten effektiven Overridesignale OR1, OR2.

Es ist möglich, dass die Abspeicherung der Schritte S6 und S9 in die Datei 10 erfolgt. In diesem Fall überschreibt die numerische Steuerung 3 die bereits abgespeicherten Overridesignale OR1, OR2 durch die effektiven Overridesignale OR1, OR2. Der Schritt S13 kann in diesem Fall unverändert beibehalten werden.

Alternativ ist es möglich, dass die Abspeicherung in eine eigene Datei 11 erfolgt. Dies ist in den Schritten S6, S9 und S13 durch die in Klammern gesetzte Angabe "11" angedeutet, also das Bezugszeichen für die weitere Datei 11. In diesem Fall speichert die numerische Steuerung 3 die effektiven Overridesignale OR1, OR2 zusätzlich zu den bereits abgespeicherten Overridesignalen OR1, OR2 ab. Die Datei 10 bleibt in diesem Fall unverändert erhalten. Jedoch ist in diesem Fall der Schritt S13 derart ausgestaltet, dass die numerische Steuerung im Schritt S13 sowohl die Datei 10 wieder schließt als auch die Abspeicherung der effektiven Overridesignale OR1, OR2 in der Datei 11 abschließt. Insbesondere erfolgt auch die Abspeicherung der effektiven Overridesignale OR1, OR2 als eigenständige, dem Nutzprogramm 6 zugeordnete Datei 11, die als Einheit verwaltet wird, der ein Name zugewiesen wird und die beispielsweise auch kopiert oder exportiert werden kann. Die erneute Generierung einer weiteren Datei 11 erfolgt vorzugsweise jedes Mal, wenn das Nutzprogramm 6 erneut ausgeführt wird. Es wird somit für jede einzelne Ausführung des Nutzprogramms 6 jeweils eine weitere eigene Datei 11 generiert, die der jeweiligen Ausführung des Nutzprogramms 6 und dem dadurch bearbeiteten Werkstück 2 individuell und proprietär zugeordnet werden kann.

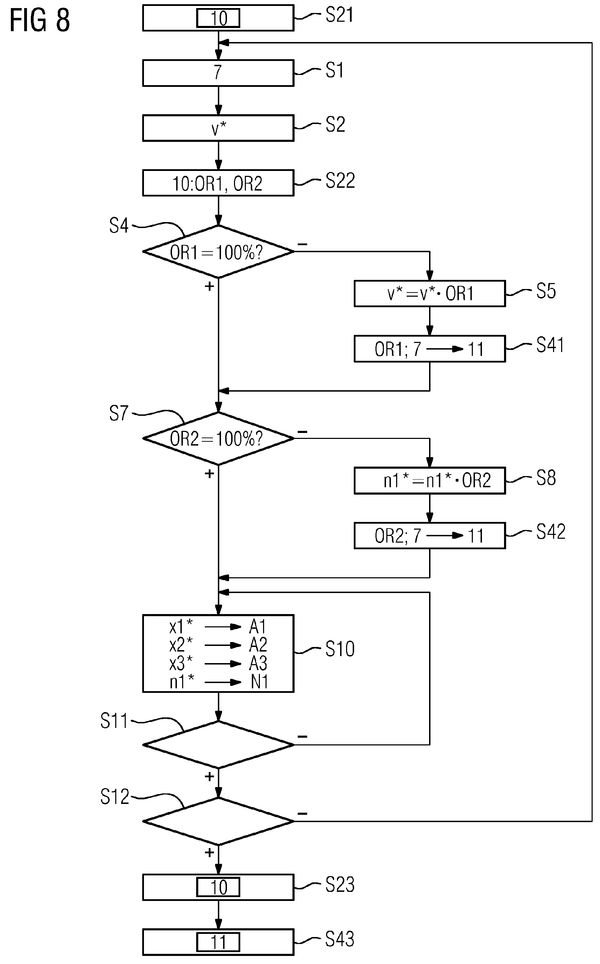

Die Abspeicherung der tatsächlich verwerteten Overridesignale OR1, OR2 in einer eigenen Datei 11 (also zusätzlich zu den bereits gespeicherten Overridesignalen OR1, OR2) ist auch bei der Ausgestaltung gemäß FIG 6 möglich. FIG 8 zeigt eine entsprechende Modifikation des Ablaufdiagramm von FIG 6.

Gemäß FIG 8 sind im Vergleich zu FIG 6 zusätzlich Schritte S41, S42 und S43 vorhanden. Im Schritt S41 ordnet die numerische Steuerung 3 (soweit ungleich 100 %) den Wert des aus der Datei 10 ausgelesenen Overridesignals OR1 dem im Schritt S1 ausgewählten Nutzbefehl 7 zu und speichert ihn - einschließlich der Zuordnung - ab. Diese Abspeicherung erfolgt in der weiteren Datei 11. In analoger Weise ordnet die numerische Steuerung 3 (soweit ungleich 100 %) den Wert des aus der Datei 10 ausgelesenen Overridesignals OR2 dem im Schritt S1 ausgewählten Nutzbefehl 7 zu und speichert ihn - einschließlich der Zuordnung - ab. Auch diese Abspeicherung erfolgt in der weiteren Datei 11. Im Schritt S43 schließt die numerische Steuerung 3 - analog zum Schritt S13 - die Abspeicherung der nunmehr verwendeten Overridesignale OR1, OR2 ab. Es wird somit eine eigene Datei 11 generiert. Diese Datei 11 ist inhaltlich identisch mit der Datei 10 ist, die als solche unverändert halten geblieben ist. Die neu generierte Datei 11 kann jedoch proprietär der erneuten Abarbeitung des Nutzprogramms 6 zugeordnet werden. Auch im Rahmen von FIG 8 erfolgt die erneute Generierung einer weiteren Datei 11 vorzugsweise jedes Mal, wenn das Nutzprogramm 6 erneut ausgeführt wird. Es wird somit für jede einzelne Ausführung des Nutzprogramms 6 jeweils eine weitere eigene Datei 11 generiert, welche die entsprechenden Sequenzen von Overridesignalen OR1, OR2 enthält und der jeweiligen Ausführung des Nutzprogramms 6 und dem dadurch bearbeiteten Werkstück 2 individuell und proprietär zugeordnet werden kann.

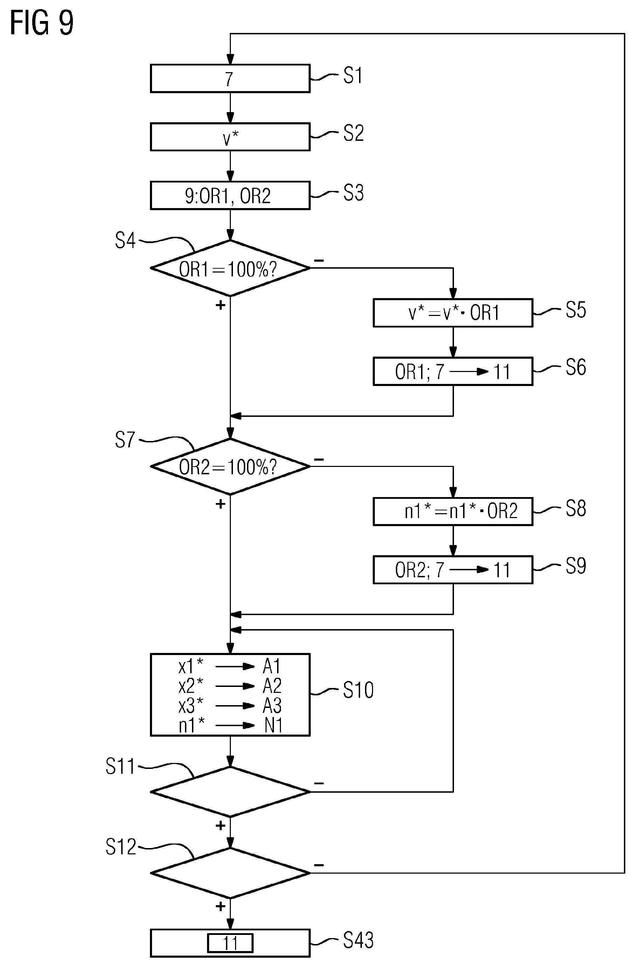

Im Rahmen der bisher in Verbindung mit den FIG 5 bis 8 erläuterten Ausgestaltungen werden im Rahmen der Ermittlung des Sollvorschubs v* und der Drehzahlsollwerte n1* stets die in der Datei 10 abgespeicherten Overridesignale OR1, OR2 verwendet. Die Verwendung erfolgt im Rahmen der Ausgestaltungen der FIG 5 und 8 alternativ, im Rahmen der Ausgestaltungen der FIG 6 und 7 zusätzlich zur Verwendung von Overridesignalen OR1, OR2, die der numerischen Steuerung 3 von der Bedienperson 8 direkt über die Mensch-Maschine-Schnittstelle 9 vorgegeben werden. Es ist jedoch auch möglich, bei der erneuten Abarbeitung des Nutzprogramms 6 die bereits in der Datei 10 abgespeicherten Overridesignale OR1, OR2 nicht mehr erneut zu verwerten, sondern ausschließlich die Overridesignale OR1, OR2 zu verwenden, die von der Bedienperson 8 über die Mensch-Maschine-Schnittstelle 9 vorgegeben werden. Dies wird nachfolgend in Verbindung mit FIG 9 näher erläutert.

FIG 9 enthält die Schritte S1 bis S12 von FIG 3 und zusätzlich den Schritt S43 von FIG 8. Weiterhin erfolgt die Abspeicherung der Schritte S6 und S9 nicht in die Datei 10, sondern in die weitere Datei 11. Im Ergebnis nimmt somit durch die Vorgehensweise von FIG 9 die numerische Steuerung von der Bedienperson 8 zwar erneut die Overridesignale OR1, OR2 entgegen und verwertet sie im Rahmen der Ermittlung des Sollvorschub v* und der Drehzahlsollwerte n1*. Auch erfolgt wie zuvor die Abspeicherung der vorgegebenen Overridesignale OR1, OR2 (sofern diese einen von 100 % verschiedenen Wert aufweisen). Die Datei 10 wird jedoch nicht überschrieben. Sie bleibt vielmehr unverändert erhalten. Es wird jedoch eine neue Datei 11 mit den nunmehr aktuell verwendeten Werten der Overridesignale OR1, OR2 generiert. Auch im Rahmen von FIG 9 erfolgt die erneute Generierung einer weiteren Datei 11 vorzugsweise jedes Mal, wenn das Nutzprogramm 6 erneut ausgeführt wird. Es wird somit für jede einzelne Ausführung des Nutzprogramms 6 jeweils eine weitere eigene Datei 11 generiert, welche die entsprechenden Sequenzen von Overridesignalen OR1, OR2 enthält und der jeweiligen Ausführung des Nutzprogramms 6 und dem dadurch bearbeiteten Werkstück 2 individuell und proprietär zugeordnet werden kann.

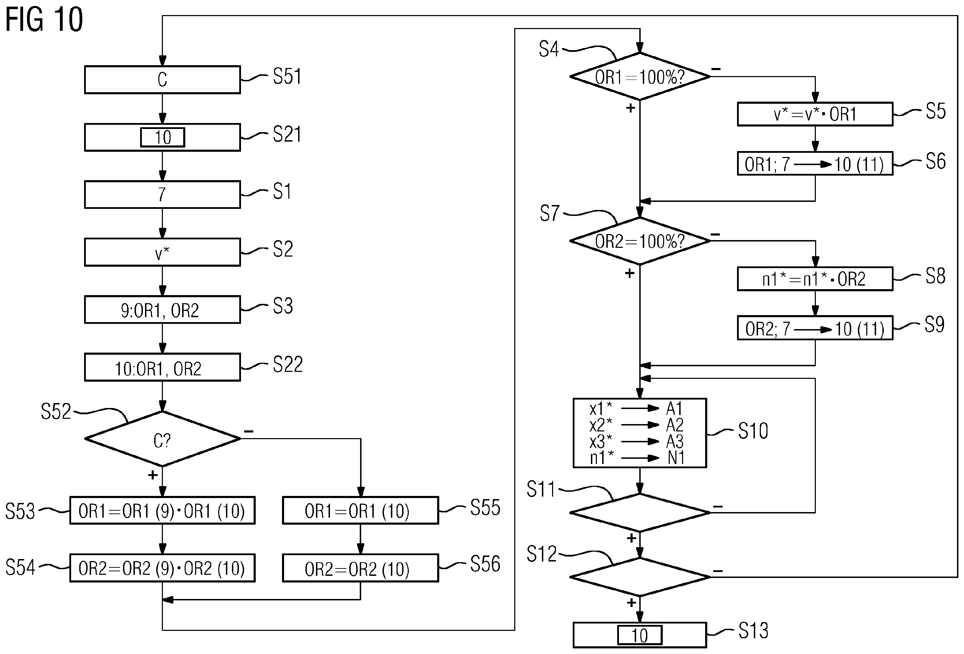

In der Regel wird der Bedienperson 8 stets die Möglichkeit gegeben, über die Mensch-Maschine-Schnittstelle 9 korrigierend in die Abarbeitung des Nutzprogramms 6 einzugreifen. Insbesondere wird die Bedienperson in der Regel stets die Overridesignale OR1, OR2 vorgeben können. In manchen Fällen kann es jedoch sinnvoll sein, diese Vorgabemöglichkeit zu sperren. Insbesondere kann es sinnvoll sein, diese Möglichkeit zu sperren, nachdem eine ordnungsgemäße Sequenz von Overridesignalen OR1, OR2 aufgefunden wurde oder wenn aus anderen, besonderen Gründen die Bedienperson 8 nicht in den Ablauf des Nutzprogramms 6 eingreifen können soll. Eine mögliche Ausgestaltung einer derartigen Möglichkeit, die Vorgabe von Overridesignalen OR1, OR2 zu sperren, wird nachfolgend in Verbindung mit FIG 10 näher erläutert.

FIG 10 baut auf der Ausgestaltung von FIG 7 auf. Zusätzlich sind bei der Ausgestaltung von FIG 10 Schritte S51 bis S56 vorhanden. Im Schritt S51 nimmt die numerische Steuerung 3 von der Bedienperson 8 einen Aktivierungsbefehl C entgegen. Der Schritt S51 wird von der numerischen Steuerung 3 vor einer jeweiligen Abarbeitung des Nutzprogramms 6 ausgeführt. In der weiteren Abfolge von FIG 10 prüft die numerische Steuerung 3 im Schritt S52, ob aufgrund des Aktivierungsbefehls C die Vorgabe von Overridesignalen OR1, OR2 über die Mensch-Maschine-Schnittstelle 9 zugelassen werden soll oder nicht. Wenn die Vorgabe von Overridesignalen OR1, OR2 über die Mensch-Maschine-Schnittstelle 9 zugelassen ist ist, geht die numerische Steuerung 3 zu den Schritten S53 und S54 über, in denen die numerische Steuerung 3 als effektive Overridesignale OR1, OR2 das Produkt der abgespeicherten Overridesignale OR1, OR2 mit den über die Mensch-Maschine-Schnittstelle 9 vorgegebenen Overridesignalen OR1, OR2 ermittelt. Wenn hingegen die Vorgabe von Overridesignalen OR1, OR2 über die Mensch-Maschine-Schnittstelle 9 nicht zugelassen ist, geht die numerische Steuerung 3 zu den Schritten S55 und S56 über, in denen die numerische Steuerung 3 als effektive Overridesignale OR1, OR2 die abgespeicherten Overridesignale OR1, OR2 (und nur diese) verwendet.

Weiterhin kann es sinnvoll sein, der Bedienperson 8 eine direkte und unmittelbar von der Bedienperson 8 wahrnehmbare Rückmeldung zu geben, wenn und sobald die numerische Steuerung 3 von der Bedienperson 8 ein Overridesignal OR1, OR2 entgegennimmt, das einen von 100 % verschiedenen Wert aufweist. Beispielsweise kann ein Blinklicht aktiviert werden, ein Feld auf einem Bediendisplay blinken oder aufleuchten, ein Signal ertönen oder ein haptisches Signal an die Bedienperson 8 ausgegeben werden. Das Signal kann von der numerischen Steuerung 3 derart bestimmt werden, dass anhand des Signals das Vorzeichen und/oder das Ausmaß der Abweichung des Overridesignals OR1, OR2 von 100 % erkennbar ist. Beispielsweise kann im Falle eines optischen Signals eine Abweichung nach oben (also auf über 100 %) rot dargestellt werden, während eine Abweichung nach unten (also auf unter 100 %) grün dargestellt wird. Das Ausmaß der Abweichung kann durch eine Intensität oder eine Blinkfrequenz codiert werden. In analoger Weise kann bei einem akustischen Signal eine Tonhöhe das Vorzeichen und eine Amplitude oder eine Wiederholfrequenz das Ausmaß angeben. Ähnliche Vorgehensweisen sind bei einem haptischen Signal möglich. In der Regel erfolgt die Ausgabe eines akustischen Signals nur für eines der beiden Overridesignale OR1, OR2. Bei einem optischen Signal und einem haptischen Signal können - je nach Signal - Signale unabhängig für beide Overridesignale OR1, OR2 ermittelt und ausgegeben werden.

Zusammengefasst betrifft die vorliegende Erfindung somit folgenden Sachverhalt:

Eine numerische Steuerung 3 arbeitet unter Kontrolle eines Betriebssystems 4 ein Nutzprogramm 6 ab, das eine Abfolge von Nutzbefehlen 7 enthält. Sie nimmt während der Abarbeitung des Nutzprogramms 6 von einer Bedienperson 8 über eine Mensch-Maschine-Schnittstelle 9 kontinuierlich ein Overridesignal OR1, OR2 entgegen. Die numerische Steuerung 3 ermittelt anhand der Nutzbefehle 7 für eine Anzahl von lagegeregelten Achsen A1 bis A3 einer von ihr gesteuerten Maschine jeweils Lagesollwerte x1* bis x3* und deren Änderungsgeschwindigkeiten und/oder für mindestens eine drehzahlgeregelte Achse N1 der Maschine Drehzahlsollwerte n1*. Sie steuert die Maschine entsprechend den ermittelten Lage- und Drehzahlsollwerten x1* bis x3*, n1*. Bei der Ermittlung der Änderungsgeschwindigkeiten für die Lagesollwerte x1* bis x3* und/oder der Drehzahlsollwerte n1* berücksichtigt die numerische Steuerung 3 den jeweils aktuellen Wert des Overridesignals OR1, OR2. Zumindest immer dann, wenn das Overridesignal OR1, OR2 einen von 100 % verschiedenen Wert aufweist, speichert die numerische Steuerung 3 das Overridesignal OR1, OR2 unter Zuordnung zum jeweiligen Nutzbefehl 7 ab, so dass anhand der abgespeicherten Overridesignale OR1, OR2 und der zugeordneten Nutzbefehle 7 die jeweiligen unter Berücksichtigung der entgegengenommenen Overridesignale OR1, OR2 ermittelten Änderungsgeschwindigkeiten der Lagesollwerte x1* bis x3* und/oder die jeweiligen unter Berücksichtigung der entgegengenommenen Overridesignale OR1, OR2 ermittelten Drehzahlsollwerte n1* rekonstruierbar sind.

Die vorliegende Erfindung weist viele Vorteile auf. Insbesondere ist es im Rahmen der erneuten Verwendung der abgespeicherten Overridesignale OR1, OR2 ohne weiteres möglich, mittels einiger weniger Ausführungen des Nutzprogramms 6 eine Sequenz von Overridesignalen OR1, OR2 aufzufinden, die zu vollauf befriedigenden Ergebnissen führt. Sobald diese Sequenz von Overridesignalen OR1, OR2 aufgefunden ist, sind erneute Steuerungseingriffe der Bedienperson 8 nicht mehr erforderlich. Die Bedienperson 8 kann sich daher ab diesem Zeitpunkt anderen Aufgaben zuwenden, beispielsweise einer anderen Maschine und deren numerischer Steuerung. Dennoch sind zur Implementierung keine Sensoren erforderlich, sondern nur die Bedienperson 8. Weiterhin ist im Rahmen der Aufzeichnung der Overridesignale OR1, OR2 im Sinne einer Protokollierung stets nachvollziehbar, ob und gegebenenfalls welche Steuerungseingriffe die Bedienperson 8 vorgenommen hat.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (3),
- wobei die numerische Steuerung (3) unter Kontrolle eines Betriebssystems (4) ein Nutzprogramm (6) abarbeitet, das eine Abfolge von Nutzbefehlen (7) enthält,
- wobei die numerische Steuerung (3) während der Abarbeitung des Nutzprogramms (6) von einer Bedienperson (8) über eine Mensch-Maschine-Schnittstelle (9) kontinuierlich ein Overridesignal (OR1, OR2) entgegennimmt,
- wobei die numerische Steuerung (3) anhand der Nutzbefehle (7) für eine Anzahl von lagegeregelten Achsen (A1 bis A3) einer von der numerischen Steuerung (3) gesteuerten Maschine jeweils Lagesollwerte (x1* bis x3*) und deren Änderungsgeschwindigkeiten und/oder für mindestens eine drehzahlgeregelte Achse (N1) der Maschine Drehzahlsollwerte (n1*) ermittelt und die Maschine entsprechend den ermittelten Lage-(x1* bis x3*) und Drehzahlsollwerten (n1*) steuert,
- wobei die numerische Steuerung (3) bei der Ermittlung der Änderungsgeschwindigkeiten für die Lagesollwerte (x1* bis x3*) und/oder der Drehzahlsollwerte (n1*) den jeweils aktuellen Wert des Overridesignals (OR1, OR2) berücksichtigt,
- wobei die numerische Steuerung (3) zumindest immer dann, wenn das Overridesignal (OR1, OR2) einen von 100 % verschiedenen Wert aufweist, das Overridesignal (OR1, OR2) unter Zuordnung zum jeweiligen Nutzbefehl (7) abspeichert, so dass anhand der abgespeicherten Overridesignale (OR1, OR2) und der zugeordneten Nutzbefehle (7) die jeweiligen unter Berücksichtigung der entgegengenommenen Overridesignale (OR1, OR2) ermittelten Änderungsgeschwindigkeiten der Lagesollwerte (x1* bis x3*) und/oder die jeweiligen unter Berücksichtigung der entgegengenommenen Overridesignale (OR1, OR2) ermittelten Drehzahlsollwerte (n1*) rekonstruierbar sind.

2. Betriebsverfahren nach Anspruch 1,
**dadurch gekennzeichnet,**
**dass** die numerische Steuerung (3) während einer erneuten Abarbeitung des Nutzprogramms (6) bei der erneuten Ermittlung der Änderungsgeschwindigkeiten für die Lagesollwerte (x1* bis x3*) und/oder der Drehzahlsollwerte (n1*) die bei der vorherigen Abarbeitung des Nutzprogramms (6) abgespeicherten Overridesignale (OR1, OR2) bei dem jeweils zugeordneten Nutzbefehl (7) als Overridesignale (OR1, OR2) berücksichtigt.

3. Betriebsverfahren nach Anspruch 2,
**dadurch gekennzeichnet,**
- **dass** die numerische Steuerung (3) während der erneuten Abarbeitung des Nutzprogramms (6) zumindest immer dann, wenn das abgespeicherte Overridesignal (OR1, OR2) einen von 100 % verschiedenen Wert aufweist, das abgespeicherte Overridesignal (OR1, OR2) unter Zuordnung zum jeweiligen Nutzbefehl (7) erneut abspeichert, so dass anhand der erneut abgespeicherten Overridesignale (OR1, OR2) und der zugeordneten Nutzbefehle (7) die jeweiligen unter Berücksichtigung der erneut abgespeicherten Overridesignale (OR1, OR2) ermittelten Änderungsgeschwindigkeiten der Lagesollwerte (x1* bis x3*) und/oder die jeweiligen unter Berücksichtigung der erneut abgespeicherten Overridesignale (OR1, OR2) ermittelten Drehzahlsollwerte (n1*) rekonstruierbar sind, und
- **dass** die im Rahmen der vorherigen Abarbeitung des Nutzprogramms (6) abgespeicherten Overridesignale (OR1, OR2) erhalten bleiben.

4. Betriebsverfahren nach Anspruch 1,
**dadurch gekennzeichnet,**
- **dass** die numerische Steuerung (3) während einer erneuten Abarbeitung des Nutzprogramms (6) von der Bedienperson (8) über die Mensch-Maschine-Schnittstelle (9) erneut kontinuierlich ein Overridesignal (OR1, OR2) entgegennimmt,
- **dass** die numerische Steuerung (3) bei der erneuten Ermittlung der Änderungsgeschwindigkeiten für die Lagesollwerte (x1* bis x3*) und/oder der Drehzahlsollwerte (n1*) die bei der vorherigen Abarbeitung des Nutzprogramms (6) dem jeweiligen Nutzbefehl (7) zugeordneten, abgespeicherten Overridesignale (OR1, OR2) bei dem jeweiligen Nutzbefehl (7) zusätzlich zum jeweils aktuellen Wert des von der Bedienperson (8) entgegengenommenen Overridesignals (OR1, OR2) berücksichtigt und
- **dass** die numerische Steuerung (3) zumindest immer dann, wenn die gleichzeitige Berücksichtigung sowohl des abgespeicherten Overridesignals (OR1, OR2) als auch des erneut entgegengenommenen Overridesignals (OR1, OR2) zu einem effektiven Overridesignal (OR1, OR2) führt, das einen von 100 % verschiedenen Wert aufweist, das effektive Overridesignal (OR1, OR2) unter Zuordnung zum jeweiligen Nutzbefehl (7) abspeichert, so dass anhand der abgespeicherten effektiven Overridesignale (OR1, OR2) und der zugeordneten Nutzbefehle (7) die jeweiligen unter Berücksichtigung der effektiven Overridesignale (OR1, OR2) ermittelten Änderungsgeschwindigkeiten der Lagesollwerte (x1* bis x3*) und die jeweiligen unter Berücksichtigung der effektiven Overridesignale (OR1, OR2) ermittelten Drehzahlsollwerte (n1*) rekonstruierbar sind.

5. Betriebsverfahren nach Anspruch 4,
**dadurch gekennzeichnet,**
**dass** die numerische Steuerung (3) die bereits abgespeicherten Overridesignale (OR1, OR2) durch die effektiven Overridesignale (OR1, OR2) überschreibt oder dass die numerische Steuerung (3) die effektiven Overridesignale (OR1, OR2) zusätzlich zu den bereits abgespeicherten Overridesignalen (OR1, OR2) abspeichert.

6. Betriebsverfahren nach Anspruch 1,
**dadurch gekennzeichnet,**
- **dass** die numerische Steuerung (3) während einer erneuten Abarbeitung des Nutzprogramms (6) von der Bedienperson (8) über die Mensch-Maschine-Schnittstelle (9) erneut kontinuierlich ein Overridesignal (OR1, OR2) entgegennimmt,
- **dass** die numerische Steuerung (3) bei der Ermittlung der Änderungsgeschwindigkeiten für die Lagesollwerte (x1* bis x3*) und/oder der Drehzahlsollwerte (n1*) erneut den jeweils aktuellen Wert des Overridesignals (OR1, OR2) berücksichtigt,
- **dass** die numerische Steuerung (3) zumindest immer dann, wenn das erneut entgegengenommene Overridesignal (OR1, OR2) einen von 100 % verschiedenen Wert aufweist, das erneut entgegengenommene Overridesignal (OR1, OR2) unter Zuordnung zum jeweiligen Nutzbefehl (7) abspeichert, so dass anhand der erneut entgegengenommenen Overridesignale (OR1, OR2) und der zugeordneten Nutzbefehle (7) die jeweiligen unter Berücksichtigung der erneut entgegengenommenen Overridesignale (OR1, OR2) ermittelten Änderungsgeschwindigkeiten der Lagesollwerte (x1* bis x3*) und/oder die jeweiligen unter Berücksichtigung der erneut entgegengenommenen Overridesignale (OR1, OR2) ermittelten Drehzahlsollwerte (n1*) rekonstruierbar sind, und
- **dass** die im Rahmen der vorherigen Abarbeitung des Nutzprogramms (6) abgespeicherten Overridesignale (OR1, OR2) erhalten bleiben.

7. Betriebsverfahren nach einem der obigen Ansprüche,
**dadurch gekennzeichnet,**
**dass** die numerische Steuerung (3) die Overridesignale (OR1, OR2) zwar immer dann, aber auch nur dann abspeichert, wenn sie einen von 100 % verschiedenen Wert aufweisen.

8. Betriebsverfahren nach einem der obigen Ansprüche,
**dadurch gekennzeichnet,**
- **dass** die numerische Steuerung (3) von der Bedienperson (8) vor einer jeweiligen Abarbeitung des Nutzprogramms (6) einen Aktivierungsbefehl (C) entgegennimmt und
- **dass** die numerische Steuerung (3) in Abhängigkeit von dem Aktivierungsbefehl (C) bei der erneuten Abarbeitung des Nutzprogramms (6) die während der erneuten Abarbeitung des Nutzprogramms (6) vorgegebenen Overridesignale (OR1, OR2) bei der Ermittlung der Änderungsgeschwindigkeiten für die Lagesollwerte (x1* bis x3*) und/oder der Drehzahlsollwerte (n1*) berücksichtigt oder nicht berücksichtigt.

9. Betriebsverfahren nach einem der obigen Ansprüche,
**dadurch gekennzeichnet,**
**dass** die numerische Steuerung (3) ein optisches, akustisches und/oder haptisches Signal an die Bedienperson (8) ausgibt, wenn und sobald die numerische Steuerung (3) von der Bedienperson (8) ein Overridesignal (OR1, OR2) entgegennimmt, das einen von 100 % verschiedenen Wert aufweist.

10. Betriebsverfahren nach Anspruch 9,
**dadurch gekennzeichnet,**
**dass** die numerische Steuerung (3) das Signal derart bestimmt, dass anhand des Signals das Vorzeichen und/oder das Ausmaß der Abweichung des Overridesignals (OR1, OR2) von 100 % erkennbar ist.

11. Betriebssystem, das Maschinencode (5) umfasst, der von einer numerischen Steuerung (3) abarbeitbar ist, wobei die Abarbeitung des Maschinencodes (5) durch die numerische Steuerung (3) bewirkt, dass die numerische Steuerung (3) ein Betriebsverfahren nach einem der obigen Ansprüche ausführt.

12. Numerische Steuerung, wobei die numerische Steuerung mit einem Betriebssystem (4) nach Anspruch 11 programmiert ist, so dass sie im Betrieb ein Betriebsverfahren nach einem der Ansprüche 1 bis 10 ausführt.

13. Maschine,
- wobei die Maschine eine Anzahl von lagegeregelten Achsen (A1 bis A3) und/oder mindestens eine drehzahlgeregelte Achse (N1) aufweist,
- wobei die Maschine eine numerische Steuerung (3) aufweist, von der die lagegeregelten Achsen (A1 bis A3) und/oder die mindestens eine drehzahlgeregelte Achse (N ein) gesteuert werden,
- wobei die numerische Steuerung (3) gemäß Anspruch 12 ausgebildet ist.

14. Kombination eines Nutzprogramms (6) mit einer Sequenz von Overridesignalen (OR1, OR2),
- wobei das Nutzprogramm (6) eine Abfolge von Nutzbefehlen (7) enthält,
- wobei das Nutzprogramm (6) von einer numerischen Steuerung (3) unter Kontrolle eines Betriebssystems (4) abarbeitbar ist, so dass von der numerischen Steuerung (3) anhand der Nutzbefehle (7) für eine Anzahl von lagegeregelten Achsen (A1 bis A3) einer von der numerischen Steuerung (3) gesteuerten Maschine jeweils Lagesollwerte (x1* bis x3*) und deren Änderungsgeschwindigkeiten und/oder für mindestens eine drehzahlgeregelte Achse (N1) der Maschine Drehzahlsollwerte (n1*) ermittelbar sind,
- wobei die Overridesignale (OR1, OR2) der Sequenz von Overridesignalen (OR1, OR2) jeweils einem der Nutzbefehle (7) zugeordnet sind und die Sequenz von Overridesignalen (OR1, OR2) zumindest dann jeweils ein Overridesignal (OR1, OR2) enthält, wenn das jeweilige Overridesignal (OR1, OR2) einen von 100 % verschiedenen Wert aufweist, so dass anhand der abgespeicherten Overridesignale (OR1, OR2) und der zugeordneten Nutzbefehle (7) geänderte Änderungsgeschwindigkeiten der Lagesollwerte (x1* bis x3*) und/oder geänderte Drehzahlsollwerte (n1*) für die einzelnen Nutzbefehle (7) rekonstruierbar sind.
